# EUROPEAN PATENT SPECIFICATION

(11) **EP 0 701 073 B1**
(45) Date of publication and mention of the grant of the patent: **10.05.2000**
(21) Application number: 95202195.4
(22) Date of filing: 12.08.1995
(51) Int. Cl.: F16H 61/00, F16H 9/12, B62M 9/04

(54) **V-belt transmission with a automatic stepless mode and a multi ratio manual mode**
Stufenloses, automatisches und handbetätigtes, mehrgängiges Keilriemengetriebe
Transmission par courroie en "U" à variation automatique continue et manuelle à plusieurs rapports

(30) Priority: 09.09.1994 IT MI941845
(43) Date of publication of application: 13.03.1996
(73) Proprietor: PIAGGIO & C. S.p.A., 56025 Pontedera (Pisa) (IT); FERRARI S.p.A., 41100 Modena (IT)
(72) Inventor: Nesti, Paolo, I-56010 Ghezzano (Pisa) (IT); Zottele, Michele, I-38050 Roncegno (Trento) (IT)
(74) Representative: Appoloni, Romano

(56) References cited:
- CH-A- 376 738
- GB-A- 1 085 296
- LU-A- 45 856
- US-A- 2 702 484
- US-A- 2 869 390

## Description

This invention relates to a V-belt automatic and/or selective transmission.

One of the main fields of application of a stepless transmission in the form of expandable pulleys for V-belt operation is in light two-wheel vehicles. This is mainly for reasons of practicality of use, constructional simplicity and economy of implementation.

This type of stepless transmission performs its ratio variation function by varying the belt winding diameters on the pulleys. In this respect a low ratio is achieved when the belt is positioned on the minimum diameter of the drive pulley and the maximum diameter of the driven pulley, whereas a high ratio is achieved when the belt is positioned on the maximum diameter of the drive pulley and the minimum diameter of the driven pulley.

The drive pulley unit usually consists of an r.p.m. regulator using centrifugal weights which open the half pulleys. The driven pulley unit consists of two movable half pulleys with an interposed counteracting spring. A torque sensor is provided to vary the axial closure load on the belt on the basis of the transmitted torque, as is an automatic dry centrifugal clutch.

In this V-belt stepless transmission of expandable pulley type only stepless operation is possible, without it being possible to control on the basis of selecting a given number of gears or predetermined ratios.

GB-A-1 085 296 relates to a steepless or infinitely variable change speed gear.

US-A-2 869 390 refers to an automatic drive speed control for a lathe, disclosing a transmission according to the preamble of claim 1.

LU-A-45 856 shows a speed control device for a washing machine.

The object of the present invention is to further improve known V-belt transmissions.

This object is attained according to the present invention by a V-belt automatic and/or selective transmission according to claim 1.

Advantageously such a V-belt automatic and/or selective transmission can be used either as a classical automatic stepless transmission or as an n-ratio selective transmission.

The characteristics and advantages of a V-belt automatic and/or selective transmission according to the present invention will be more apparent from the description thereof given hereinafter by way of non-limiting example with reference to the accompanying schematic drawings, in which:
Figure 1 is a partly sectional view from above of a V-belt automatic and/or selective transmission according to the present invention;
Figure 2 is a section on the line II-II of Figure 1;
Figure 3 is a sectional enlarged detail in a first operating position, similar to that of Figure 1; and
Figure 4 is the sectional enlarged detail of Figure 3 in a second operating position.

The figures show a V-belt automatic and/or selective transmission according to the present invention mounted for example on a light two-wheel vehicle.

In this respect, on the crankcase 11 of a two-wheel vehicle there is positioned a pulley transmission comprising a drive pulley 12, 13 and a driven pulley 14, 15 connected together by an inextensible belt 16. In the illustrated embodiment the drive pulley comprises a fixed half pulley 12 and a movable half pulley 13 caused to move by a special lever linkage according to the invention. The driven pulley consists of two half pulleys, one 14 being axially movable and the other 15 being axially fixed, with these there being associated a counteracting spring 17, and to which a centrifugal clutch indicated schematically at 18 is connected.

More precisely the movable half pulley 13 is axially slidable on a driving shaft extension 19 so that the belt 16 can lie on different diameters. The movable half pulley 13 is caused to move axially by a flange 20 via an interposed bearing 21, for example a ball bearing. The movable half pulley 13 is guided in its axial movement without rotation on the shaft extension 19 by suitable guide elements. In particular these can comprise two grooves 10 provided in a tubular extension 13' of the half pulley 13, to receive rollers 9 fixed to the shaft extension 19.

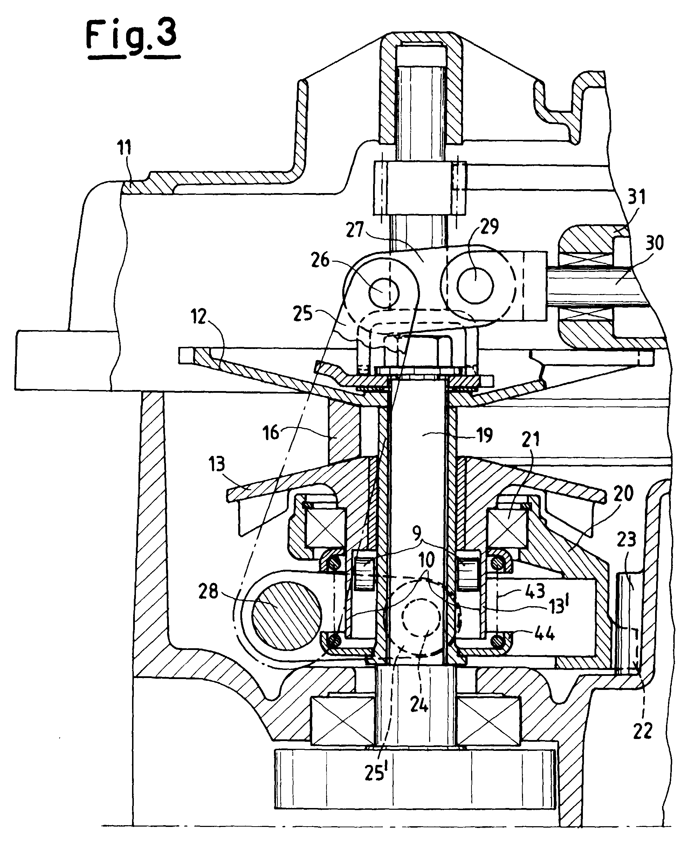

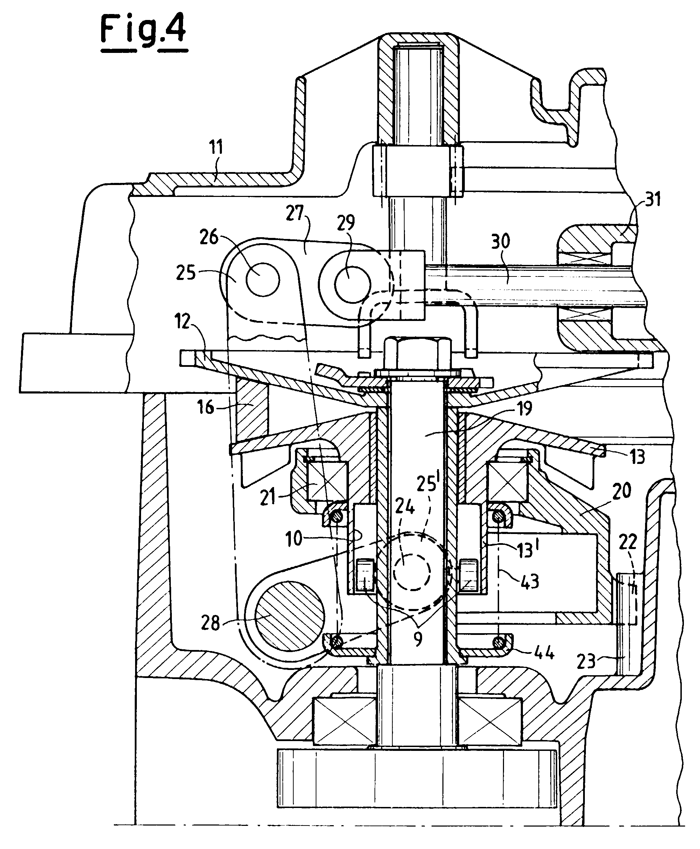

The flange 20 also comprises at least one projecting appendix 22 inserted into or embracing a guide 23 which prevents rotation between the parts and forms analogous axial guide elements to direct its sliding along the shaft extension 19. Into a hollow portion within the flange 20 there are inserted sliding elements 24 positioned at the first end of a crank lever 25 which is pivoted at its other end at 26 to a link or connecting rod 27 of the said lever linkage. Figures 3 and 4 show the limiting positions which can be assumed by the half pulley 13 and flange 20.

The crank lever 25 is pivoted in an intermediate position at 28 to the vehicle crankcase 11 so as to allow movement of the parts under the control of a motor means, as described hereinafter.

That part of the crank lever 25 carrying the elements 24 sliding within the cavity in the flange 20 is fork shaped at 25'.

The link 27 is pivoted at 29 to one end of a rod 30 emerging from a containing casing 31. The rod 30 has a fork-shaped enlarged second end 32 contained within the casing 31 to embrace and be mounted on a guide pin 33 rigid with the casing 31.

To the enlarged end 32 there is also fixed a roller 34, which is positioned between the arms of the fork and is inserted in a cam-shaped track or slot 35. The track 35 forms part of a cam body 36 which rotates about said central pin 33 and on a further peripheral portion carries toothing 37. The toothing 37 is arranged to engage a worm 38 provided on the shaft 39 of a motor 40 forming said motor means. Between the motor 40 and said linkages there hence exist cam elements which control their relative positions and determine the actual gear engaged.

It will be noted that the motor 40, for example an electric motor, is controlled by an electronic control centre, indicated schematically at 41, and a pushbutton, indicated schematically at 42 and positioned for example on the handlebar (not shown), during selective operation.

It should also be noted that to facilitate movement and ensure correct positioning of the parts, a counteracting spring 43 is positioned between the flange of the drive half pulley 13 and a fixed plate 44 facing it and rigid with the shaft extension 19.

The cam body 36 is also provided with two abutment ends 45 and 46 which engage stop elements 47 and 48 provided in the containing casing 31.

A V-belt automatic and/or selective transmission for a two-wheel vehicle according to the present invention is particularly advantageous as it can be used both as an automatic transmission and as a selective transmission.

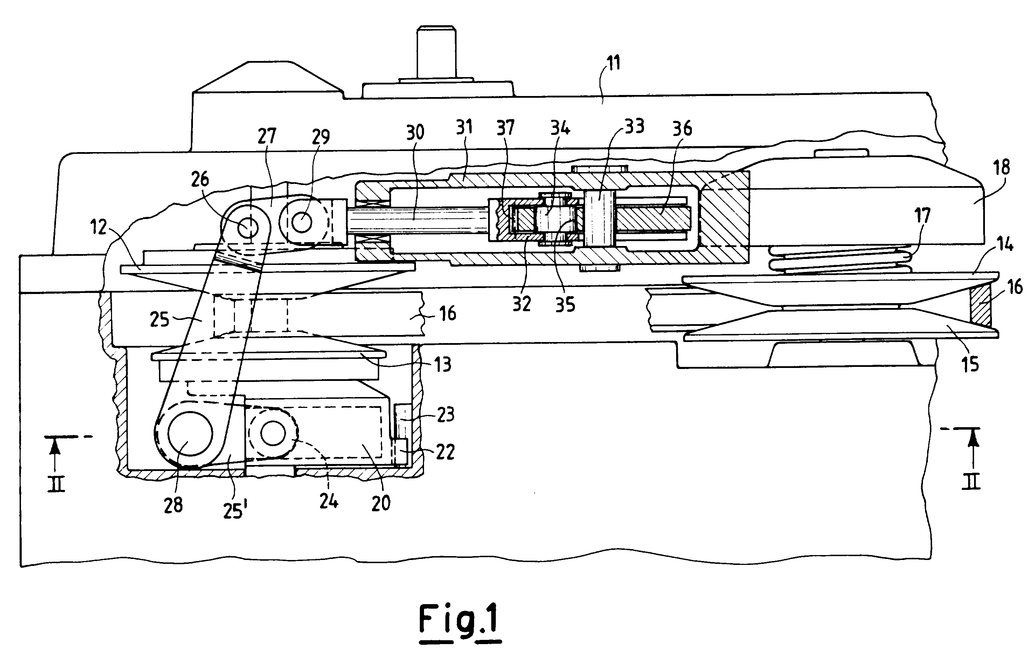

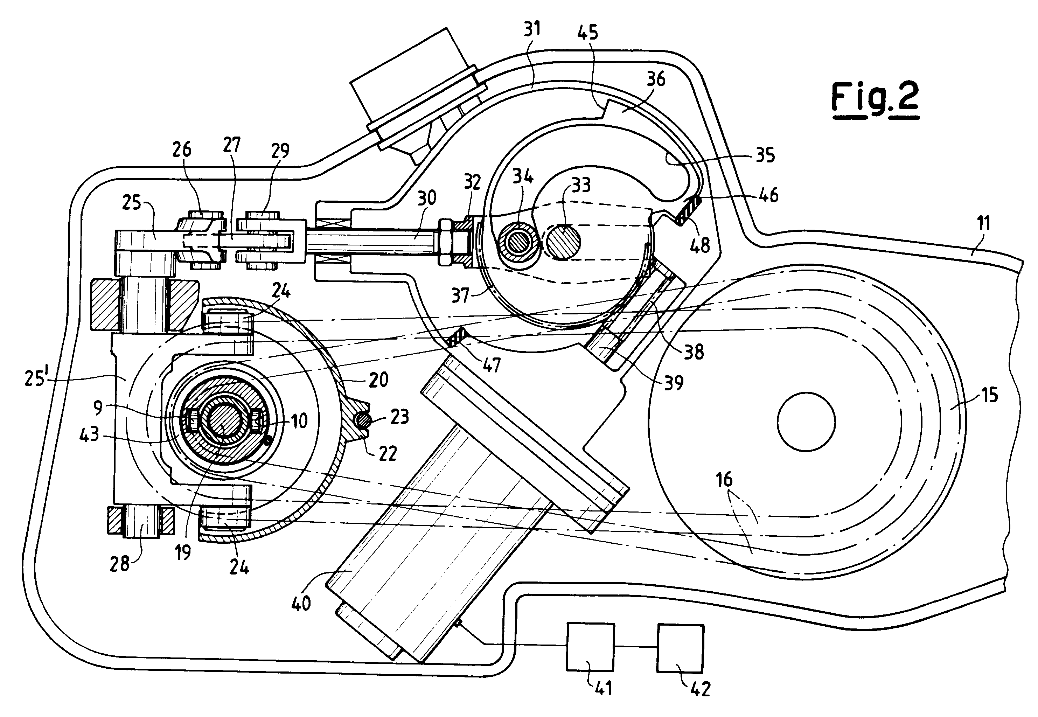

In this respect, on vehicle departure after starting the engine (not shown), the electric motor 40 automatically goes into the position of minimum extension of the rod 30 as shown in Figures 1-3. As can be seen from these figures, in this position the winding radius of the V-belt 16 about the drive pulley 12, 13 is a minimum, with minimum transmission ratio.

In this state, both with stepless operation and with selective operation the centrifugal clutch 18 is open, so allowing the engine to idle as with normal automatic transmissions.

In the case of stepless operation the automatic transmission behaves as a traditional transmission. On accelerating the engine with the transmission at minimum ratio the centrifugal clutch 18 engages. During the use of the transmission the electronic control centre 41 controls the continuous movement of the drive half pulley 13 to produce a corresponding stepless variation in the transmission ratio on the basis of the set parameters, ie the engine r.p.m. and the position of the fuel feed control.

In the case of selective operation, allowable with the transmission of the present invention, the start is exactly as heretofore described. This is because the electronic control centre 41 sets minimum transmission ratio and maintains it until the centrifugal clutch 18 is closed. When the centrifugal clutch closes it is then possible, by operating the pushbutton 42 on the handlebar, to increase the ratio by operating the motor 40 so that the engagement between the worm 38 and the toothing 37 rotates the cam body 36. The rotation of the cam 36 causes the rod 30 to emerge from the containing casing 31, which by virtue of the interposed lever linkage causes the half pulley 13 of the drive pulley to move. This movement occurs to a determined position corresponding to a new winding radius of the belt 16 and hence a new transmission ratio. Any further shift in the winding ratio or vehicle gear is achieved in the same manner. These shift operations are also possible in the reverse direction, to reduce the ratio as far as the said minimum ratio.

It should be noted that advantageously, during the running of the two-wheel vehicle, the type of operation can be switched from stepless automatic to selective and vice versa by means of the electronic control centre 41 which handles the various parameters.

It is also advantageously possible to achieve changes in operation by providing a cam body 36 with a slot 35 of different profile, appropriate to the use for which the two-wheel vehicle is intended.

## Claims

1. A V-belt automatic and/or selective transmission consisting of a pulley transmission comprising a drive pulley (12, 13) and a driven pulley (14, 15) connected together by an inextensible belt (16), said drive and driven pulleys being in the form of two half pulleys, a movable half pulley (13) of said drive pulley (12; 13), axially slidable on a driving shaft extension (19), is caused to slide by a lever linkage (20, 25, 27, 30) operated by a motor (40) controlled by a control (41) and by a pushbutton (42), said motor (40) driving a cam element (34, 36), said movable half pulley (13) is moved by a flange (20), axial guide elements (9, 10) being provided, characterized in that said transmission is mountable on the crankcase (11) of a two-wheel vehicle, said motor (40) is controlled by an electronic control centre (41), between said half pulley (13) and said flange (20) a bearing (21) is interposed, said axial guide elements (9, 10) positioned between said movable half pulley (13) and said shaft extension (19) are in the form of at least two grooves (10) provided in a tubular extension (13') of said movable pulley (13) and in the form of at least two rollers (9) fixed to said shaft extension (19).

2. A V-belt automatic and/or selective transmission as claimed in claim 1, characterised in that guide elements positioned between said flange (20) and said crankcase (11) are on one side in the form of at least one appendix (22) and on the other side in the form of at least one respective guide (23).

3. A V-belt automatic and/or selective transmission as claimed in claim 1, characterised in that said lever linkage comprises a crank lever (25) pivoted at one end to said cam element (34, 36) by way of a link (27) and at its other end to a flange (20) associated with said movable half pulley (13).

4. A V-belt automatic and/or selective transmission as claimed in claim 3, characterised in that said crank lever comprises a bar-shaped first part and a fork-shaped second part (25') which is connected via sliding elements (24) to a hollow part of said flange (20).

5. A V-belt automatic and/or selective transmission as claimed in claim 1, characterised in that said cam element comprises a rotating body (36) provided with a slot (35) arranged as a cam within which a roller (34) rigid with one end of said lever linkage slides.

6. A V-belt automatic and/or selective transmission as claimed in claim 5, characterised in that said rotating body (36) also comprises on a peripheral portion a toothing (37) arranged to engage a worm (38) provided on the shaft (39) of said motor means (40) connected to said electronic control centre (41).

7. A V-belt automatic and/or selective transmission as claimed in claim 1 or 5, characterised in that said cam element comprises, on its rotating body (36), end abutments (45, 46) arranged to engage stop elements (47, 48) to limit rotation, said stop elements being provided in a containing casing (31) for a rod (30) which connects said cam element to said lever linkage.

## Patentansprüche

1. Automatisches und/oder wahlfreies V-Riemen-Wechselgetriebe, bestehend aus einer Riemenscheibenkraftübertragung, die eine Antriebsriemenscheibe (12, 13) und eine Abtriebsriemenscheibe (14, 15) umfaßt, welche durch einen undehnbaren Riemen (16) miteinander verbunden sind, wobei die An- und Abtriebsriemenscheibe in der Form von zwei Halbriemenscheiben sind, wobei eine bewegbare Halbriemenscheibe (13) der Antriebsriemenscheibe (12, 13), die axial auf einer Antriebswellenverlängerung (19) verschiebbar ist, durch ein Hebelgestänge (20, 25, 27, 30) zur Verschiebung veranlaßt wird, welches durch einen Motor (40) betätigt wird, der mittels einer Steuer- bzw. Regeleinrichtung (41) und mittels eines Druckknopfs (42) gesteuert bzw. geregelt wird, wobei der Motor (40) ein Nocken- bzw. Steuerkurvenelement (34, 36) antreibt, wobei die bewegbare Halbriemenscheibe (13) durch einen Flansch (20) bewegt wird, und wobei axiale Führungselemente (9, 10) vorgesehen sind, dadurch **gekennzeichnet**, daß das Getriebe auf der Karkasse (11) eines Zweiradfahrzeugs anbringbar ist, wobei der Motor (40) durch ein elektronisches Steuer- bzw. Regelzentrum (41) gesteuert bzw. geregelt wird, wobei zwischen die Halbriemenscheibe (13) und den Flansch (20) ein Lager (21) zwischengefügt ist, wobei die axialen Führungselemente (9, 10), die zwischen der bewegbaren Halbriemenscheibe (13) und der Wellenverlängerung (19) positioniert sind, in der Form von wenigstens zwei Nuten (10) sind, die in einer rohrförmigen Verlängerung (13') der bewegbaren Riemenscheibe (13) vorgesehen sind, und in der Form von wenigstens zwei Rollen (9), die an der Wellenverlängerung (19) befestigt sind.

2. Automatisches und/oder wahlfreies V-Riemengetriebe nach Anspruch 1, dadurch **gekennzeichnet**, daß Führungselemente, die zwischen dem Flansch (20) und der Karkasse (11) positioniert sind, auf einer Seite in der Form von wenigstens einem Ansatz (22) sind, und auf der anderen Seite in der Form von wenigstens einer jeweiligen Führung (23).

3. Automatisches und/oder wahlfreies V-Riemengetriebe nach Anspruch 1, dadurch **gekennzeichnet**, daß das Hebelgestänge einen Kurbelhebel (25) umfaßt, der an einem Ende an dem Nocken- bzw. Steuerkurvenelement (34, 36) mittels eines Glieds (27) drehbar gelagert ist, und an seinem anderen Ende an einem Flansch (20), der mit der bewegbaren Halbriemenscheibe (13) verbunden ist, drehbar gelagert ist.

4. Automatisches und/oder wahlfreies V-Riemengetriebe nach Anspruch 3, dadurch **gekennzeichnet**, daß der Kurbelhebel einen stabförmigen ersten Teil und einen gabelförmigen zweiten Teil (25'), welcher über Gleitelemente (24) mit einem hohlen Teil des genannten Flanschs (20) verbunden ist, umfaßt.

5. Automatisches und/oder wahlfreies V-Riemengetriebe nach Anspruch 1, dadurch **gekennzeichnet**, daß das Nocken- bzw. Steuerkurvenelement einen Rotationskörper bzw. rotierenden Körper (36) umfaßt, der mit einem Schlitz (35) versehen ist, welcher als eine Nocke bzw. Steuerkurve angeordnet bzw. eingerichtet ist, innerhalb deren eine Rolle (34), die fest mit einem Ende des Hebelgestänges verbunden ist, gleitet.

6. Automatisches und/oder wahlfreies V-Riemengetriebe nach Anspruch 5, dadurch **gekennzeichnet**, daß der Rotationskörper bzw. rotierende Körper (36) außerdem auf einem Umfangsteil eine Zahnung (37) umfaßt, die so angeordnet bzw. eingerichtet ist, daß sie mit einer Schnecke (38) in Eingriff ist, die auf der Welle (39) des genannten Motormittels (40) vorgesehen ist, welches mit dem elektronischen Steuer- bzw. Regelzentrum (41) verbunden ist.

7. Automatisches und/oder wahlfreies V-Riemengetriebe nach Anspruch 1 oder 5, dadurch **gekennzeichnet**, daß das Nocken- bzw. Steuerkurvenelement auf seinem Rotationskörper bzw. rotierende Körper (36) Endanschläge (45, 46) umfaßt, die so angeordnet bzw. eingerichtet sind, daß sie mit Stopelementen (47, 48) in Eingriff treten, um die Rotation zu begrenzen, wobei die Stopelemente in einem Aufnahmegehäuse (31) für eine Stange (30) vorgesehen sind, welche das Nocken- bzw. Steuerkurvenelement mit dem Hebelgestänge verbindet.

## Revendications

1. Transmission par courroie en V automatique et/ou sélective, constituée d'une transmission par poulie comprenant une poulie d'entraînement (12, 13) et une poulie entraînée (14, 15), reliées par une courroie (16) inextensible, ces poulies d'entraînement et entraînée se présentant sous la forme de deux demi-poulies, une demi-poulie mobile (13) de la poulie d'entraînement (12, 13), axialement coulissante sur un prolongement d'arbre menant (19), est amenée à coulisser par une articulation à levier (20, 25, 27, 30) actionnée par un moteur (40) commandé par une commande (41) et par un bouton-poussoir (42), ce moteur (40) entraînant un élément formant came (34, 36), la demi-poulie mobile (13) est déplacée par une bride (20), des éléments de guidage axiaux (9, 10) étant prévus, caractérisée en ce que la transmission est susceptible d'être montée sur le carter (11) d'un véhicule à deux roues, en ce que le moteur (40) est commandé par un centre de commande électronique (41), en ce qu'un palier (21) est monté entre la demi-poulie (13) et la bride (20), en ce que les éléments de guidage axiaux (9, 10) positionnés entre la demi-poulie mobile (13) et le prolongement d'arbre (19) se présentent sous la forme d'au moins deux rainures (10) ménagées dans un prolongement tubulaire (13') de la poulie mobile (13), et sous la forme d'au moins deux rouleaux (9) fixés sur le prolongement d'arbre (19).

2. Transmission par courroie en V automatique et/ou sélective selon la revendication 1, caractérisée en ce que les éléments de guidage positionnés entre la bride (20) et le carter (11) se présentent, d'un côté, sous la forme d'au moins un appendice (22) et, de l'autre côté, sous la forme d'au moins un guide (23) respectif.

3. Transmission par courroie en V automatique et/ou sélective selon la revendication 1, caractérisée en ce que l'articulation à levier comprend un levier à manivelle (25) pivotant, à une extrémité, sur l'élément formant came (34, 36) au moyen d'une articulation (27) et, à son autre extrémité, sur une bride (20) associée à la demi-poulie mobile (13).

4. Transmission par courroie en V automatique et/ou sélective selon la revendication 3, caractérisée en ce que le levier à manivelle comprend une première partie en forme de barre et une deuxième partie en forme de fourche (25') qui est reliée, par l'intermédiaire d'éléments coulissants (24) à une partie creuse de la bride (20).

5. Transmission par courroie en V automatique et/ou sélective selon la revendication 1, caractérisée en ce que l'élément formant came comprend un corps rotatif (36) pourvu d'une fente (35) ménagée à la façon d'une came à l'intérieur de laquelle coulisse un rouleau (34) solidaire d'une extrémité de l'articulation à levier.

6. Transmission par courroie en V automatique et/ou sélective selon la revendication 5, caractérisée en ce que le corps rotatif (36) comprend également, sur une partie périphérique, une denture (37) conçue pour coopérer avec une vis sans fin (38) présente sur l'arbre (39) des moyens formant moteur (40) reliés au centre de commande électronique (41).

7. Transmission par courroie en V automatique et/ou sélective selon la revendication 1 ou 5, caractérisée en ce que l'élément formant came comprend, sur son corps rotatif (36), des butées terminales (45, 46) conçues pour coopérer avec des éléments d'arrêt (47, 48) pour limiter la rotation, ces éléments d'arrêt étant prévus dans un boîtier (31) destiné à contenir une tige (30) qui relie l'élément formant came à l'articulation à levier.
